# EUROPEAN PATENT SPECIFICATION

(11) **EP 4 412 886 B1**
(45) Date of publication and mention of the grant of the patent: **12.11.2025**
(21) Application number: 22798187.5
(22) Date of filing: 04.10.2022
(51) Int. Cl.: B62B 3/02, B62B 5/00

(54) **FOLDABLE WHEELED TROLLEY AND ADAPTER DEVICE**
KLAPPBARER HANDWAGEN MIT RÄDERN UND ADAPTERVORRICHTUNG
CHARIOT PLIABLE A ROUES ET DISPOSITIF ADAPTATEUR

(30) Priority: 06.10.2021 IT 202100025442
(43) Date of publication of application: 14.08.2024
(73) Proprietor: Okhos S.r.l., 53100 Siena (IT)
(72) Inventor: MANCINI, Stefano, Jesi (AN) - 60035 (IT)
(74) Representative: Conversano, Gabriele
(86) International application number: PCT/IB2022/059448
(87) International publication number: WO 2023/057888

(56) References cited:
- EP-A1- 3 744 610
- DE-A1- 102017 001 747
- US-A- 4 941 797

## Description

### Technical field

The present invention relates to a system comprising a trolley with pivoting wheels provided with a pantograph foldable frame for transporting various objects together with a device apt to interact with said trolley to allow its loading easily in the luggage compartment of a vehicle with platform lowered relative to the opening of the rear tailgate.

### State of the art

At the state of the art, various kinds of wheeled trolleys for transporting general goods are known. The most representative example are the trolleys commonly used to do the shopping, which normally comprise a frame provided with wheels, a basket to receive the shopping and a handle suitably shaped to move the wheeled trolley. Here, it is intended to solve the technical problem of transferring the content of the shopping trolley in the luggage compartment of a car in the simplest possible way and without efforts by the final user.

Some examples of foldable wheeled trolleys to be positioned in the luggage compartment of a car are described in documents WO2010001398, US2010140887, RU2647824, CA2367865, DE102017001747, US4941797, EP3744610.

Unfortunately, the examples of such types of trolleys already known at the state of the art do not solve a series of problems and are disadvantageous both from the point of view of their functionality and their structural complexity.

In particular, in the documents known at the state of the art it remains unsolved the technical problem concerning the loading of a foldable trolley in a luggage compartment of a car, wherein the platform for loading is lowered relative to the loading level resulting with the luggage compartment tailgate open. This means that usually, when the trolley is moved near the luggage compartment of such a car, it is needed to make an effort for lifting the goods above the level of the luggage compartment with the tailgate open and, in the following, for positioning the goods on the lowered platform inside the luggage compartment. All these operations, in addition to be difficult from the point of view of the physical effort, are also particularly complex, for example in case of wheeled trolleys which are compactable or foldable in the luggage compartment of a car.

### AIM OF THE INVENTION

Therefore, aim of the present invention is to solve all the just described drawbacks by the realization of a system comprising a wheeled trolley provided with a pantograph foldable frame together with a device apt to interact with said trolley in order to allow its simple loading in the luggage compartment of a vehicle with lowered loading platform.

Yet, another aim of the invention is to reduce markedly the efforts a user has to make to transfer goods from a foldable wheeled trolley in the luggage compartment of a car.

Yet, another aim is to provide a system for transporting various objects which is easy to be used, not particularly complex from the mechanical point of view and convenient from an economic point of view as well.

The present invention is defined in claim 1. It reaches the prefixed aims since it is a system comprising a trolley and an adapter device configured to interact with said trolley, said adapter being configured to be positioned in the luggage compartment of a vehicle having loading platform lowered relative to the loading level, said trolley comprising a frame, a tray and a basket, said frame comprising two couples of vertical legs provided with pivoting wheels, a couple of pantograph mechanisms, two rotating joints and two sliding joints; said tray comprising a couple of sliding guides with inner rollers for said basket configured so that the basket can slide relative to the tray only in horizontal direction, a couple of outer sliding guides for said frame; said basket comprising a lower rim and an upper rim, an outer fabric cloth fixed between the two lower and upper rims, said basket being configured to slide relative to said tray by means of said couple of sliding guides with rollers between a first position of end of stroke, in which said basket is partially overlapped to said adapter and a second position in which said basket is anchored to and integral with the tray by means of stop means on the tray; said adapter having a base configured to be supported on the plane of the luggage compartment of a car, a couple of height adjustable tubes relative to said base, width lower than the tray, said system being characterized in that said guides force said basket to slide so that said lower rim is at a higher height than said tray's one, so that between said lower rim and the tray remains an empty space and in that said couple of tubes of said adapter has a thickness such that it can be introduced in said empty space.

### DESCRIPTION OF THE FIGURES

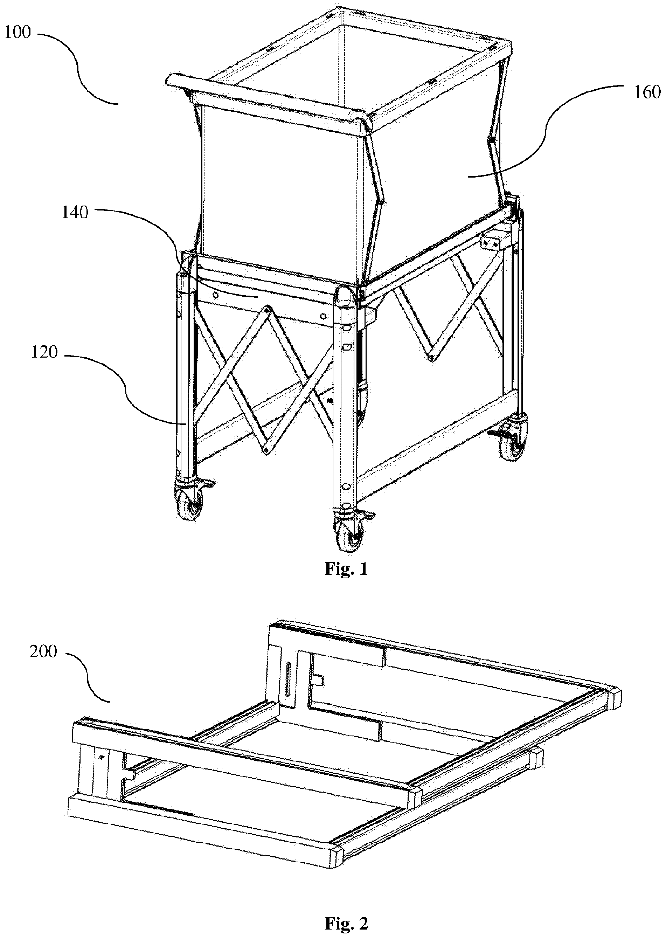

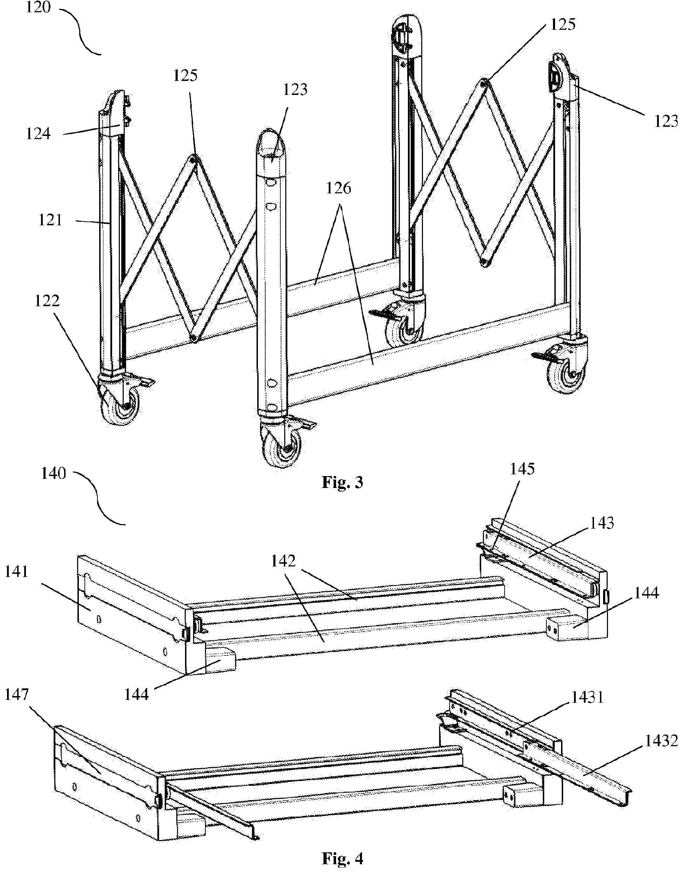

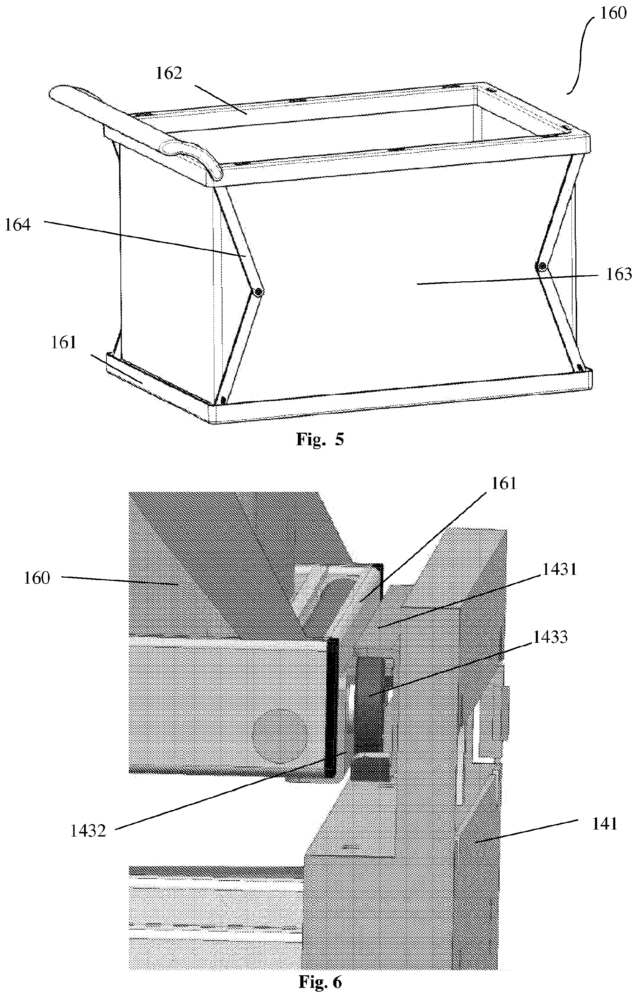

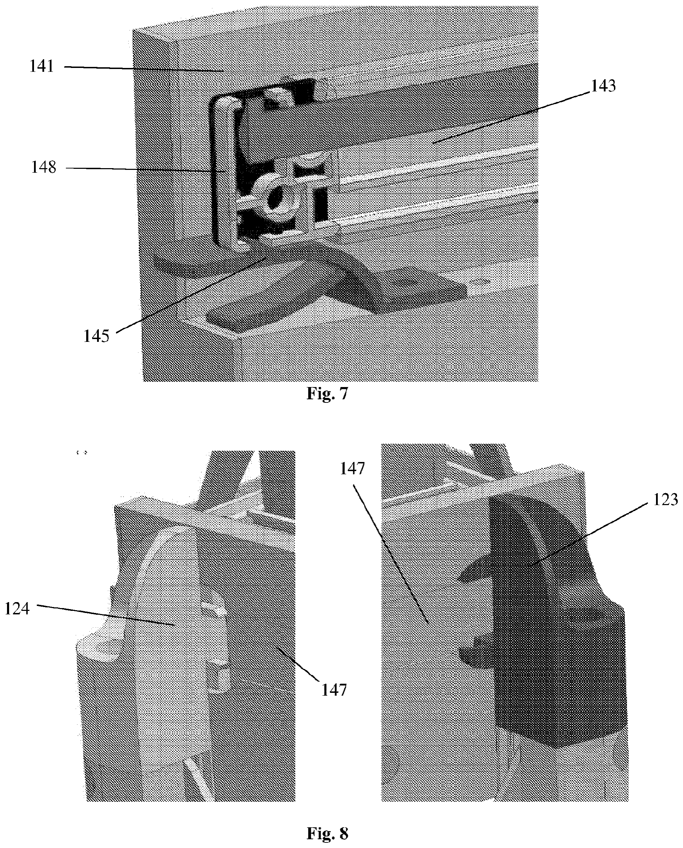

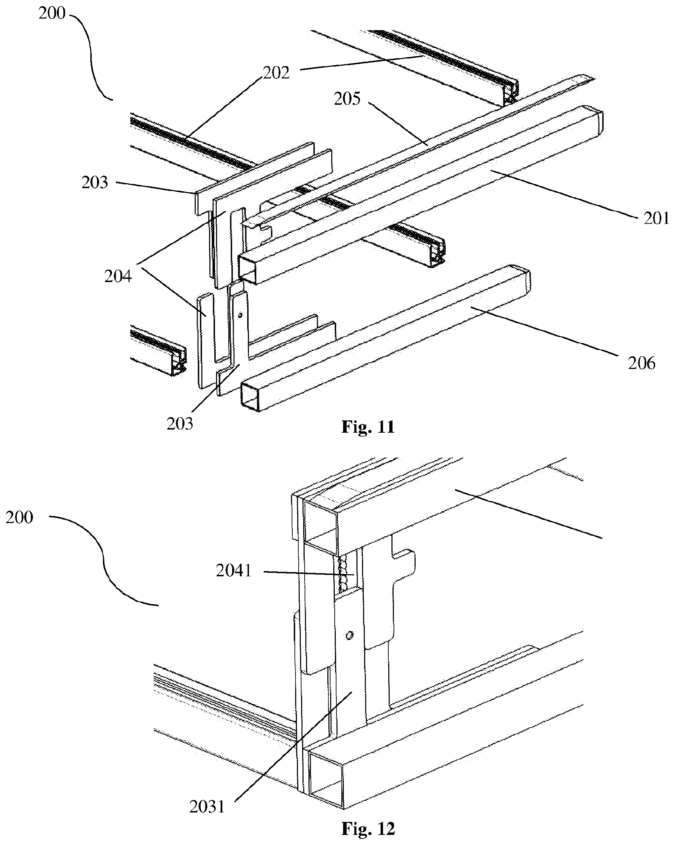

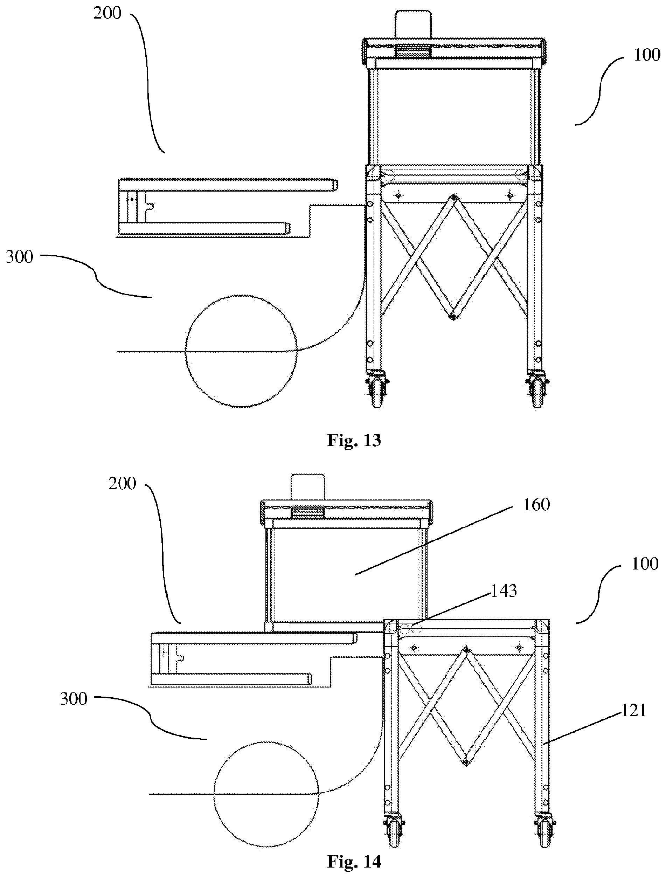

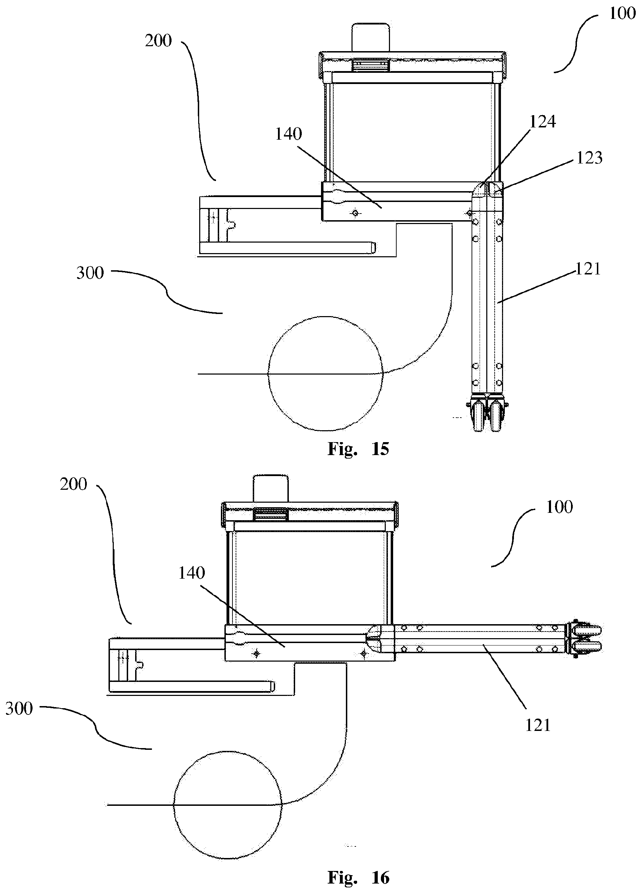

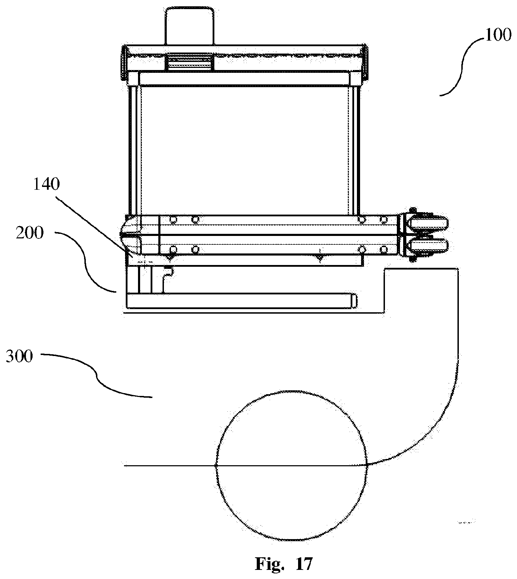

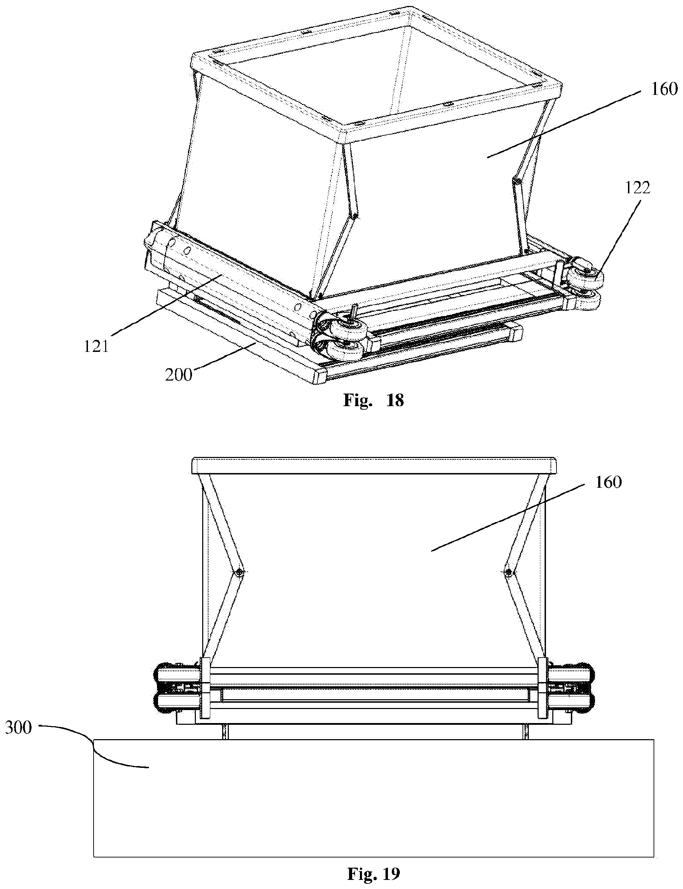

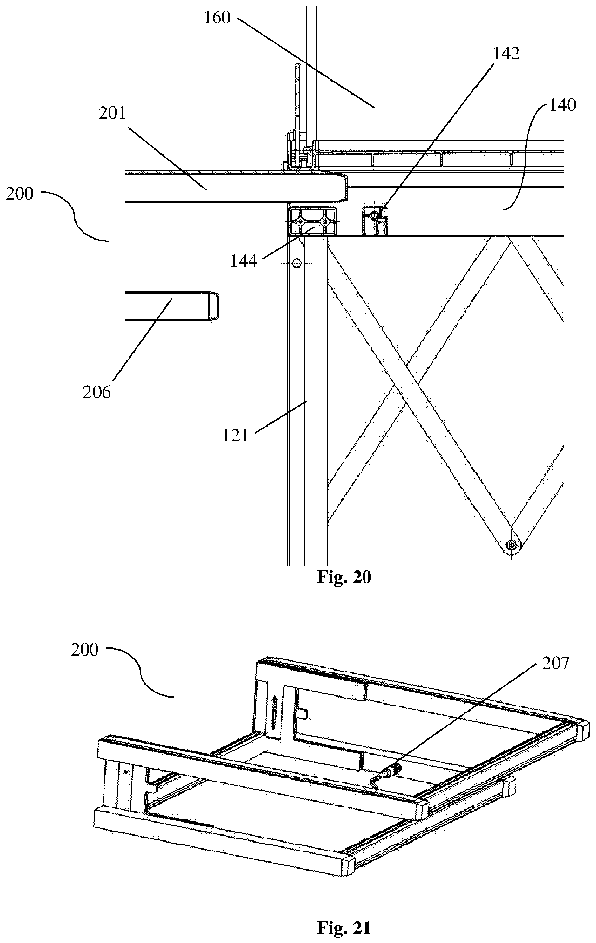

Figures 1 and 2 show two fundamental elements of the system: the trolley and the adapter device for the luggage compartment of a car. Figures 3 to 5 show the main elements of the trolley: the pantograph foldable frame (fig. 3), the tray interacting with the tray (fig, 4), the basket interacting with the tray (fig. 5). Figure 6 shows a detail on the sliding guide with rollers mounted on the tray and which allows the basket coupling and sliding relative to the tray. Figure 7 shows a detail of the coupling means of the basket to the trolley. Figures 8 to 10 show details on the rotating joint and sliding joint. Figures 11 and 12 show some details of the adapter device and its possibility of height adjustment. Figures 13 to 17 show a sequence of operations for loading the foldable trolley in the luggage compartment of a car. Figures 18 and 19 show respectively a panoramic view and a front view of the system trolley-adapter once the trolley closing and loading operation in the luggage compartment of a car is ended. Figures 20 shows a side view of the system trolley-adapter with particular attention to the empty space between basket and tray inside which it is possible to introduce the adapter. Figure 21 shows an alternative embodiment of the adapter provided with connector to allow the system to be connected to the electric system of a vehicle.

### DETAILED DESCRIPTION

With reference to the above cited figures, a preferred embodiment of the present invention will be described in the following as a way of not limiting example.

As it is clear from figures 1 and 2, the system comprises a wheeled trolley (100) provided with foldable frame for transporting goods and an adapter (200) to be positioned in the luggage compartment of a vehicle with lowered loading platform. In particular, said trolley (100) comprises in turn the following main elements: a pantograph foldable frame (120) with pivoting wheels; a tray (140) configured to interact with said frame (120) and a basket (160) integral with said tray (140) and configured to move in horizontal direction with reciprocating motion by means of suitable sliding guides. The adapter (200) is mainly made up of a base to be supported on the platform of the luggage compartment and a couple of height adjustable tubes relative to the base as well as transversal section bars in steel assembled to each other so to realize a device as shown in figure 2 apt to be positioned in the luggage compartment of a car with platform lowered relative to the opening of the rear tailgate.

For convenience of description, the trolley with all its main elements, the adapter device for the luggage compartment and a preferred using mode of the system constituted by the trolley and adapter will be described in the following in this order. With particular reference to figure 3, one of the main elements of the trolley (100) is the pantograph foldable frame (120) comprising four elements or vertical legs (121) in stiffened section bar, kept together by a couple of pantograph mechanisms (125) and by a couple of bars in longitudinal direction (126). The result is an almost rectangular frame (120) wherein the couple of pantograph mechanisms (125) is positioned on the short side between a leg and the other one while the couple of bars (126) is positioned similarly on the long side. It is quite clear that the so configured frame (120) is apt to be folded along the short side by means of an opening or closing of respective pantograph mechanisms. Yet with reference to figure 3, each one of the legs (121) is provided at the lower end with a pivoting wheel (122) provided with brake. Two sliding joints (124) and two rotating joints (123) are positioned at the upper end of each leg, the joints being positioned opposite to each other relative to the short side of the frame (120). By means of said joints (123, 124) and by means of suitable guides on the tray (140) the trolley frame is opened or closed according to a procedure which will be described in more detail in the following. Preferably, said joints (123, 124) are anchored to each of the legs (121) by means of a screw connection.

The tray (140) is made up of a couple of aluminum extruded, opposite section bars (141), kept together by a couple of aluminum transversal bars (142). In the inner portion of the tray a couple of sliding guides with rollers (143) is housed, which are apt to make the basket (160) sliding towards the car in the loading step. A couple of anti-tilting block means (144) and a stop means (145) for the basket (160) during usage are also provided in the inner portion of the tray (140). On the outer side of the aluminum section bars (141) the tray (140) comprises further a couple of outer sliding guides (147) configured to interact with the sliding joints (123) and rotating joints (124) of the frame (120). With reference to figure 5, the basket (160) is simply made up of a couple of rims, lower rim (161) and upper rim (162) respectively, realized by means of the aluminum extruded section bars fixed to each other, and an outer fabric cloth (163) fixed between the two rims (161) and (162). Conveniently, the cloth (163) is configured to bend on oneself when the basket is closed by means of a suitable pantograph mechanism (164). The bottom of the basket (160) is made up of a kind of typical roller shutter made up of laths extruded and plaited on each other, not shown for convenience. As it is shown in detail in figure 6, the sliding guide with rollers (143) is made up of two portions, a fixed portion (1431) integral with the section bar (141) of the tray (140) from the inner side and a movable portion (1432) sliding inside the fixed portion and integral with the basket (160). In particular, the sliding portion of the guide is fixed at the two opposite lower section bars (161) of the basket (160) along the short side. The movable portion (1431) of the guide is configured to slide inside the fixed portion (1431) by means of a plurality of rollers (1433). The result obtained is that the basket (160), once mounted on the tray (140), results configured to slide in horizontal direction by means of said sliding guide with rollers (143). The choice of the sliding guide with rollers is also quite convenient since it allows to incline the basket slightly upwards while the movable portion (1432) of the guide (143) goes out. This kind of movement results to be useful in the loading step of the basket in a car because it compensates for possible misalignments.

Figure 7 shows a detail view of the stop means (145) for the basket (160) located in the inner portion of the tray (140). In particular, since during the usage of the trolley the basket has to be kept still, it is provided a stop means (145) made up of an element configured to be engaged with a suitably shaped section bar (148). In this way, in order to release the basket and to allow its movement by means of the sliding guides with rollers, it is needed to exert a pressure downwards on the stop means (145).

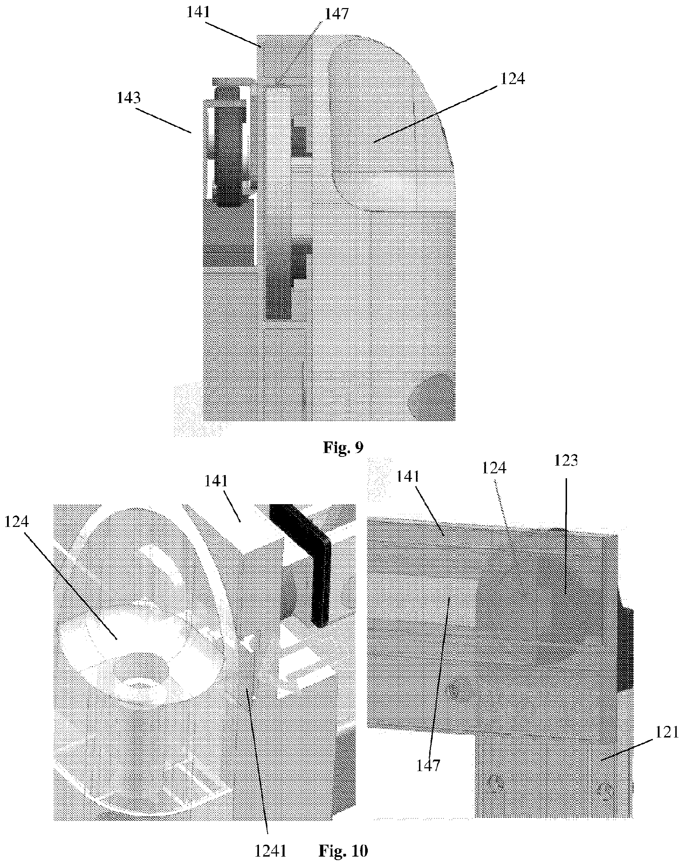

As yet said, at the upper end of each leg (121) of the trolley there are positioned a couple of sliding joints (123) and a couple of rotating joints (124), arranged opposite to each other relative to the short side of the frame (120). They are real joints which are interfaced with the tray (140) thus allowing the rotation of the legs and their sliding horizontally inside the luggage compartment of the car. With particular reference to figures 8 to 10, it is clear that the rotating joint (123) is configured to remain still in its position, i.e. it cannot translate in horizontal direction along the guide (147), but it can only rotate about 90 degrees relative to the tray (140) only if coupled to the sliding joint (124). The coupling between said joints is realized when the sliding joint (124) translates horizontally inside the outer sliding guide (147) up to be connected to the respective rotating joint (123). The fastening between the two portions is realized by provision of projecting coupling means (1241) on the rotating joint (123) configured to be coupled with suitable complementary seats (1231) on the sliding joint (124). As it is shown in detail in figure 9, the sliding joint (124) is configured to slide inside a recessed guide (147) realized outside on the section bar (141) of the tray (140). With particular reference to figure 10, instead, it is clear that, after a releasing action on the projecting coupling means (1241), the sliding joint (124) is configured to slide in horizontal direction along the guide (147), to be coupled with the rotating joint (123), to rotate about 90 degrees and to translate always in horizontal direction along the guide (147). In other words, the translation of the sliding joint (124) towards the rotating joint (123) provides:
- the legs (121) to be closed along the short side of the frame (120) of the trolley (100) by means of the pantograph mechanism (125),
- the rotation of the folded legs (121) about 90 degrees,
- the translation of the folded legs (121) in horizontal direction in the guide (147) along the sides (141) of the tray (140).

The aim of such movement will be clearer in the following while describing a usage mode of the foldable trolley together with the adapter device described in detail in the following.

With particular reference to figures 2, 11 and 12 the adapter (200) is a device configured to be located in the luggage compartment of a car with the platform lowered relative to the opening of the tailgate. Moreover, the adapter (200) is configured also to be interfaced with the trolley (100) when the trolley is moved near the luggage compartment of a car.

The adapter device (200) is made up of:
- a base which is supported on the lowered platform of the luggage compartment,
- a couple of height adjustable tubes (201) relative to the base,
- a plurality of aluminum section bars (202) arranged transversally to said tubes (201),
- a double couple of side brackets (203, 204) shaped so to connect in vertical direction the base of the adapter with the height adjustable tubes (201), thus realizing a loading plane and supporting plane for said adapter (200).

With particular reference to figures 11 and 12, it is clear that preferably the base of the adapter is made up of a couple of tubes (206), wholly similar to the couple of height adjustable tubes (201) but with lower length, and a transversally arranged aluminum section bar (202). The height adjustable and longer tubes (201) are configured to be interfaced with the trolley, in particular with the lower rim (161) of the basket (160) sliding on the guide with rollers (143). So, the supporting plane of the adapter is overhanging and is able to support a maximum load of about 50 kg. To make the reciprocal sliding of the basket (160) on the adapter (200) easier an element (205) in thermoplastic material is conveniently applied on the upper surface of the height adjustable tubes (201) and, so, on the supporting plane of the adapter (200). Said thermoplastic material can be conveniently polyoxymethylene, commonly said POM. The adapter (200), once supported on the bottom of the luggage compartment, is configured to be height adjusted to compensate for the difference of luggage compartment platform level but also the different depths of the luggage compartments of the various cars.

The adapter sides are symmetrical, and a height adjustment mechanism of the adapter is provided on each side. The height adjustment of the adapter occurs by means of a double couple of opposite plates (203, 204) shaped so to connect the base of the adapter (200) with the height adjustable tubes (201) interfacing with the trolley. The weight force applied at the end of the tubes (201) generates a couple on the height adjustment system distributing itself equally on the double couple of plates (203, 204). Said couple of plates arranged side by side, one for each side, is configured to slide only in vertical direction while they are blocked in the other two directions. In such way, they counteract efficiently side and longitudinal stresses.

In particular, as it is clear from figures 11 and 12, the plate (203) is realized with T shape with a pronounced tooth (2031) configured to be engaged in the respective seat (2041) of the plate (204) of complementary shape to the plate (203), with almost inverted "U" shape. The couple of plates (203, 204) is laterally coupled to a similar couple of plates (203, 204) arranged in a specular way relative to the other, so that by interacting with each other it is possible to realize a height adjustment, preferably with a pitch of 5 mm.

After describing all the main elements both of trolley and adapter, it will be described now a usage procedure of the system (figures 13 to 17) comprising the trolley and adapter when the trolley (100) is moved near the luggage compartment of a car (300) with lowered loading platform, on which the adapter (200) is arranged.

As it is clear from figure 13, the loading of the trolley (100) in a car occurs by moving the long side of the trolley near to the rear bumper of the car (300). By means of the guides with rollers (143) mounted between basket (160) and tray (140), the basket slides towards the adapter (previously adjusted at the right height) up to the end of stroke of the guides with rollers (143). In this step, the basket (160) is overlapped partially to the adapter (200) for a portion so that it weighs on the adapter (figure 14). It is usually enough to make the basket slide on the adapter approximately more than its half-length. The guides with rollers (143) allow to incline the basket slightly upwards and to compensate for possible height differences which can be generated for various reasons. The elements (205) in thermoplastic material having self-lubricating properties make the sliding of the basket on the supporting plane of the adapter easy, thus reducing friction.

Once arrived at the end of the stroke the basket (160) is blocked and the tray (140) starts to slide inwards in the luggage compartment of the car always by acting by means of the sliding guide with rollers (143), i.e. the fixed portion (1431) of the guide (143) closes on the movable portion (1432) arrived at the end of stroke. While the tray (140) slides horizontally inwards the legs (121) of the trolley supported on the bumper of the car (300) remain still, thus making the other couple of legs (121), which are at a greater distance from the car, move near. In this step, the sliding joint (124) moves along the guide (147) up to be coupled with the rotating joint (124), as it is shown in figure 15. At the end of this step, the rotating joint is connected to the sliding joint and, as a consequence, the legs will be connected in couples. With reference to figure 16, at this point, it is possible to make the legs (121) rotate about 90° relative to the tray (140) around the coupled rotating and sliding joint, thus going in a horizontal position almost parallel to the loading plane of the luggage compartment. In this position, as it is clear from figure 17, the legs (121) arranged in horizontal position can translate in turn horizontally by means of the guide (147) obtained on the tray (140) in order that the system comprising trolley and adapter is completely folded and positioned in the luggage compartment of the car, as it is clear from the views in figures 18 and 19.

With particular reference to figure 20, it is clear that the height adjustable tubes (201) of the adapter (200) are configured to be introduced in the empty space between the lower rim (161) of the basket (160) and the tray (140), since the adapter (200) has lower width than the tray (140), as it is clear also from figures 18 and 19. In particular, said empty space is provided between the lower rim (161) of the basket (160) and the transversal bar (142) of the tray (140), in other words between the bottom of the basket (160) and the transversal bar (142) of the tray (140). Yet with reference to figure 20 and with a reference to figure 4, it is clear the provision of a couple of anti-tilting block means (144), which are made up of overhanging elements with almost parallelepiped shape arranged inside the tray at the same height as the transversal bars (142) and under the sliding guides with rollers (143). They are particularly apt to guarantee the stability and safety of the system during the loading/unloading operations of the trolley (100) from the car, so to avoid its tilting due to the unbalance of the weights inside. Finally, figure 21 shows an alternative embodiment of the adapter (200) on which it is possible the provision of a connector (207) to allow the connection of the system comprising the trolley (100) and the adapter (200) to the electric system of the car on which they are positioned. In this way, the electric supply can be provided for loading any other electronic device, which can be conveniently located on board of the trolley (100).

## Claims

1. System comprising a trolley (100) and an adapter device (200) configured to interact with said trolley (100), said adapter (200) being configured to be positioned in the luggage compartment of a vehicle having loading platform lowered relative to the loading level, said trolley (100) comprising a frame (120), a tray (140) and a basket (160),
said frame (120) comprising
- two couples of vertical legs (121) provided with pivoting wheels (122),
- a couple of pantograph mechanisms (125),
- two rotating joints (124) and two sliding joints (123);
said tray (140) comprising
- a couple of sliding guides with inner rollers (143) for said basket (160) configured so that the basket (160) can slide relative to the tray (140) only in horizontal direction,
- a couple of outer sliding guides (147) for said frame (120);
said basket (160) comprising
- a lower rim (161) and an upper rim (162),
- an outer fabric cloth (163) fixed between the two lower (161) and upper rims (162),
said basket (160) being configured to slide relative to said tray (140) by means of said couple of sliding guides with rollers (143) between a first position of end of stroke, in which said basket (160) is partially overlapped to said adapter (200) and a second position in which said basket (160) is anchored to and integral with the tray by means of stop means (145) on the tray (140);
said adapter (200) having
- a base configured to be supported on the plane of the luggage compartment of a car,
- a couple of height adjustable tubes (201) relative to said base,
- a width smaller than the tray (140),
said system being **characterized in that** said sliding guides with rollers (143) force said basket (160) to slide so that said lower rim (161) is at a higher height than said tray (140),
so that between said lower rim (161) and the tray (140) remains an empty space and **in that** said couple of tubes (201) of said adapter (200) has a thickness such that it can be introduced in said empty space.

2. System according to claim 1, **characterized in that** said rotating joint (123) is configured to rotate about 90 degrees relative to the tray (140) only if coupled to the respective sliding joint (124).

3. System according to claims 1 and 2, **characterized in that** said sliding joint (124) is configured to translate horizontally towards the respective rotating joint (123) inside said outer sliding guide (147).

4. System according to claims 1 to 3, **characterized in that** said coupling between the rotating joint (123) and respective sliding joint (124) is provided by provision of projecting coupling means (1241) on the rotating joint (123) configured to be coupled with suitable complementary seats (1231) on the sliding joint (124).

5. System according to claims 1 to 4, **characterized in that** said tray (140) is made up of a couple of aluminum extruded, opposite section bars (141), kept together by a couple of aluminum transversal bars (142).

6. System according to claims 1 to 5, **characterized in that** said sliding guide with rollers (143) comprises a fixed portion (1431) integral with the section bar (141) of the tray (140) from the inner side and a movable portion (1432) sliding inside said fixed portion (1431) and integral with the basket (160).

7. System according to claims 1 to 6, **characterized in that** said tray (140) comprises further a couple of anti-tilting block means (144), which are made up of overhanging elements with almost parallelepiped shape arranged inside the tray (140) at the same height as the transversal bars (142) and under the sliding guides with rollers (143).

8. System according to claims 1 to 7, **characterized in that** said adapter (200) comprises also a double couple of side plates (203, 204) configured to connect the base of the adapter (200) with the height adjustable tubes (201) so that they can slide only in vertical direction.

9. System according to claim 8, **characterized in that** the first couple of plates (203, 204) is laterally coupled with a second couple of plates (203, 204) arranged in a specular way relative to said first couple and **in that** the plate (203) is realized in "T" shape with a pronounced tooth (2031) configured to be engaged in the respective seat (2041) of the plate (204) of complementary shape to the plate (203), with almost inverted "U" shape.

10. System according to any one of the preceding claims, configured to interact with the luggage compartment of a car (300) according to a procedure comprising the following steps:
a. moving the long side of the trolley (100) near to the rear bumper of the car (300) with the luggage compartment open;
b. adjustment at the desired height of the adapter (200)
c. releasing the basket (160) by means of the stop means (145),
d. sliding of the basket (140) towards the adapter up to the end of stroke by means of the sliding guide with rollers (143),
e. sliding of the tray (140) inwards in the luggage compartment of the car (300) always by means of the sliding guide with rollers (143),
f. closing the legs (121) by sliding the sliding joint along the outer sliding guide (147) of the tray,
g. coupling the sliding joint with the rotating joint,
h. rotation of the legs (121) at about 90 degrees relative to the tray (140) around the coupled rotating and sliding joint,
i. translation of the rotated and horizontally arranged legs (121) along the outer sliding guide (147) inside the luggage compartment.

## Patentansprüche

1. System bestehend aus einem Trolley (100) und einer Adaptervorrichtung (200), die so konfiguriert ist, um mit dem Trolley (100) zusammenzuwirken. Der Adapter (200) ist so konfiguriert, dass er im Kofferraum eines Fahrzeugs positioniert werden kann, dessen Ladefläche im Vergleich zur Ladeebene abgesenkt ist, wobei der Trolley (100) besteht aus einem Fahrgestell (120), einer Plattform (140) und einem Korb (160), wobei das Fahrgestell (120) umfasst:
- zwei Paar vertikale Füße (121) mit Schwenkrädern (122),
- ein Paar Pantograph-Mechanismen (125),
- zwei Drehgelenke (124) und zwei Gleitgelenke (123), wobei die Plattform (140) umfasst
- ein Paar Gleitführungen mit inneren Rollen (143) für den Korb (160), die so konfiguriert sind, dass der Korb (160) relativ zur Plattform (140) nur in horizontaler Richtung gleiten kann,
- ein Paar äußere Gleitführungen (147) für das Fahrgestell (120);
wobei der Korb (160) umfasst:
- einen unteren Rand (161) und einen oberen Rand (162);
- eine äußere Plane (163), die zwischen der zwei unteren (161) und oberen (162) Ränder befestigt ist,
wobei der Korb (160) ist so konfiguriert, dass er relativ zur Plattform (140) mittels des Paars Gleitrollenführungen (143) zwischen einer ersten Endposition, in der der Korb (160) den Adapter (200) teilweise überlappt, und einer zweiten Position gleitet, in der der Korb (160) mittels Anschlägen (145) an der Plattform (140) verankert und gesichert ist;
wobei der Adapter (200) umfasst:
- eine Basis, die so konfiguriert ist, dass sie auf der Ebene des Kofferraums eines Autos gestützt werden kann,
- ein Paar Rohre (201), die relativ zu dieser Basis höhenverstellbar sind,
- eine Breite, die geringer ist als die der Plattform (140).
wobei das System ist **dadurch gekennzeichnet, dass**:
die Gleitrollenführungen (143) den Korb (160) so verschieben, dass der untere Rand (161) höher als die der Plattform (140) gleitet, sodass zwischen dieser unterem Rand (161) und der Plattform (140) ein Hohlraum verbleibt, und wobei das Rohrpaar (201) des Adapters (200) ist so dick, dass es in diesen Hohlraum eingesetzt werden kann.

2. System nach Anspruch 1, **dadurch gekennzeichnet, dass** das Drehgelenk (123) konfiguriert ist, um dann um 90 Grad relativ zur Plattform (140) zu drehen, nur wenn es mit dem entsprechenden Gleitgelenk (124) gekoppelt ist.

3. System nach den Ansprüchen 1 und 2, **dadurch gekennzeichnet, dass** das Gleitgelenk (124) konfiguriert ist, um sich innerhalb der äußeren Gleitführung (147) horizontal in Richtung des entsprechenden Drehgelenks (123) zu verschieben.

4. System nach den Ansprüchen 1 bis 3, **dadurch gekennzeichnet, dass** die Kopplung zwischen dem Drehgelenk (123) und dem entsprechenden Gleitgelenk (124) durch vorstehende Kopplungsmittel (1241) am Drehgelenk (123) durchgeführt wird, die mit entsprechenden komplementären Sitzen (1231) am Gleitgelenk (124) gekoppelt werden können.

5. System nach den Ansprüchen 1 bis 4, **dadurch gekennzeichnet, dass** die Plattform (140) aus einem Paar stranggepresster Aluminiumstäbe (141) mit gegenüberliegenden Querschnitten besteht, die durch ein Paar Aluminiumquerstäben (142) zusammengehalten werden.

6. System nach den Ansprüchen 1 bis 5, **dadurch gekennzeichnet, dass** die Gleitrollenführung (143) einen festen Teil (1431) umfasst, der von innen an der Querstab (141) der Plattform (140) befestigt ist, und einen beweglichen Teil (1432), der im festen Teil (1431) gleitet und am Korb (160) befestigt ist.

7. System nach den Ansprüchen 1 bis 6, **dadurch gekennzeichnet, dass** die Plattform (140) zusätzlich ein Paar Kippsicherungen (144) umfasst, die aus freitragenden Elementen in quasi-Parallelepiped-Form bestehen und innerhalb der Plattform (140) auf gleicher Höhe mit den Querstreben (142) und unter den Gleitrollenführungen (143) angeordnet sind.

8. System nach den Ansprüchen 1 bis 7, **dadurch gekennzeichnet, dass** der Adapter (200) zusätzlich ein doppeltes Paar Seitenplatten (203, 204) umfasst, die konfiguriert sind, um die Basis des Adapters (200) mit den höhenverstellbaren Rohren (201) zu verbinden, sodass diese nur vertikal gleiten können.

9. System nach Anspruch 8, **dadurch gekennzeichnet, dass** das erste Plattenpaar (203, 204) seitlich mit einem zweiten Plattenpaar (203, 204) verbunden ist, das spiegelbildlich zum ersten Plattenpaar angeordnet ist, und dass die Platte (203) die Form eines "T" mit einem ausgeprägten Zahn (2031) aufweist, der in die entsprechende Aufnahme (2041) der Platte (204) eingreift, die eine zur Platte (203) komplementäre Form in Form eines nahezu umgekehrten "U" aufweist.

10. System nach einem der vorhergehenden Ansprüche, das für die Interaktion mit dem Kofferraum eines Fahrzeugs (300) gemäß einem Verfahren mit den folgenden Schritten konfiguriert ist:
a. Bewegen der Längsseite des Trolleys (100) in die Nähe der hinteren Stoßstange des Fahrzeugs (300) bei geöffnetem Gepäckraum;
b. Einstellen des Adapters (200) auf die gewünschte Höhe;
c. Entriegeln des Korbs (160) mithilfe der Haltemittel (145);
d. Gleiten des Korbs (140) in Richtung Adapter bis zum Endanschlag mithilfe der Gleitrollenführung (143);
e. Gleiten der Plattform (140) in Richtung Gepäckraum des Fahrzeugs (300), ebenfalls mithilfe der Gleitrollenführung (143);
f. Schließen der Füße (121) durch Gleiten des verschiebbaren Drehgelenks (124) entlang der äußeren Gleitführung (147) der Plattform;
g. Koppeln des Gleitgelenks mit dem Drehgelenk;
h. Drehen der Füße (121) um ca. 90 Grad relativ zur Plattform (140) um das gekoppelte Dreh- und Gleitgelenk;
i. Translation der Füße (121), gedreht und horizontal angeordnet entlang der äußeren Gleitführung (147) im Inneren des Gepäckraums.

## Revendications

1. Système comprenant un chariot (100) et un dispositif adaptateur (200) configuré pour interagir avec ledit chariot (100), ledit adaptateur (200) étant configuré pour être positionné dans le compartiment à bagages d'un véhicule dont le plateau de chargement est abaissé par rapport au niveau de chargement, le chariot (100) comprenant un châssis (120), un plateau (140) et un panier (160), le châssis (120) comprenant :
- deux paires de pieds verticaux (121) équipés de roues pivotantes (122),
- une paire de mécanismes pantographes (125),
- deux articulations rotatives (124) et deux articulations coulissantes (123), le plateau (140) comprenant :
- une paire de guides coulissants à galets intérieurs (143) pour ledit panier (160), configurés de telle sorte que le panier (160) puisse coulisser par rapport au plateau (140) uniquement dans le sens horizontal ;
- une paire de guides coulissants extérieurs (147) pour ledit châssis (120) ;
ledit panier (160) comprenant :
- un rebord inférieur (161) et un rebord supérieur (162) ;
- une toile extérieure (163) fixée entre les rebords inférieur (161) et supérieur (162), ledit panier (160) étant configuré pour coulisser par rapport au plateau (140) grâce à ladite paire de guides coulissants à galets (143) entre une première position de fin de course, dans laquelle le panier (160) chevauche partiellement l'adaptateur (200), et une deuxième position dans laquelle ledit panier (160) est ancré et solidaire du plateau grâce à des butées (145) situées sur le plateau (140),
ledit adaptateur (200) comportant :
- une base configurée pour être posée sur le plan du compartiment à bagages d'une voiture, une paire de tubes (201) réglables en hauteur par rapport à cette base,
- une largeur inférieure à celle du plateau (140),
ledit système étant **caractérisé en ce que** :
lesdits guides coulissants à galet (143) forcent le panier (160) à coulisser de sorte que le bord inférieur (161) soit plus haut que celui du plateau (140), de sorte qu'un espace vide subsiste entre ce bord inférieur (161) et le plateau (140), et **en ce que** ladite paire des tubes (201) de l'adaptateur (200) a une telle épaisseur qui permet leur introduction dans cet espace vide.

2. Système selon la revendication 1, **caractérisé en ce que** ledit joint rotatif (123) est configuré pour tourner d'environ 90 degrés par rapport au plateau (140) uniquement s'il est couplé au joint coulissant (124) correspondant.

3. Système selon les revendications 1 et 2, **caractérisé en ce que** ledit joint coulissant (124) est configuré pour se déplacer horizontalement vers le joint rotatif (123) correspondant à l'intérieur dudit guide coulissant extérieur (147).

4. Système selon les revendications 1 à 3, **caractérisé en ce que** ledit couplage entre le joint rotatif (123) et le joint coulissant (124) correspondant est assuré par des moyens de couplage en saillie (1241) sur le joint rotatif (123), configurés pour être couplés à des logements complémentaires appropriés (1231) sur le joint coulissant (124).

5. Système selon les revendications 1 à 4, **caractérisé en ce que** ledit plateau (140) est constitué d'une paire de barres (141) extrudées en aluminium avec des sections opposées, maintenues ensemble par une paire de barres transversales en aluminium (142).

6. Système selon les revendications 1 à 5, **caractérisé en ce que** ledit guide coulissant à galets (143) comprend une partie fixe (1431) solidaire de la barre en section (141) du plateau (140) par l'intérieur, et une partie mobile (1432) coulissant à l'intérieur de ladite partie fixe (1431) et solidaire du panier (160).

7. Système selon les revendications 1 à 6, **caractérisé en ce que** ledit plateau (140) comprend en outre une paire de moyens de blocage anti-basculement (144), constitués d'éléments en porte-à-faux de forme quasi parallélépipédique, disposés à l'intérieur du plateau (140) à la même hauteur que les barres transversales (142) et sous les guides coulissants à galets (143).

8. Système selon les revendications 1 à 7, **caractérisé en ce que** ledit adaptateur (200) comprend également une double paire de plaques latérales (203, 204) configurées pour relier la base de l'adaptateur (200) aux tubes réglables en hauteur (201) afin qu'ils puissent coulisser uniquement verticalement.

9. Système selon la revendication 8, **caractérisé en ce que** la première paire de plaques (203, 204) est accouplée latéralement à une deuxième paire de plaques (203, 204) disposées de manière spéculaire par rapport à la première paire et **en ce que** la plaque (203) est réalisée en forme de « T » avec une dent prononcée (2031) configurée pour s'engager dans le siège respectif (2041) de la plaque (204) de forme complémentaire à la plaque (203), en forme de « U » presque inversé.

10. Système selon l'une quelconque des revendications précédentes, configuré pour interagir avec le compartiment à bagages d'une voiture (300) selon une procédure comprenant les étapes suivantes :
a. déplacement du côté long du chariot (100) à proximité du pare-chocs arrière de la voiture (300), avec le compartiment à bagages ouvert ;
b. réglage de l'adaptateur (200) à la hauteur souhaitée ;
c. libération du panier (160) au moyen du dispositif de blocage (145) ;
d. coulissement du panier (140) vers l'adaptateur jusqu'en fin de course au moyen du guide coulissant à galet (143) ;
e. coulissement du plateau (140) vers l'intérieur du compartiment à bagages de la voiture (300), toujours au moyen du guide coulissant à galets (143) ;
f. fermeture des pieds (121) en faisant coulisser l'articulation rotative coulissante (124) le long du guide coulissant extérieur (147) du plateau ;
g. accouplement de l'articulation coulissante à l'articulation rotative ;
h. rotation des pieds (121) d'environ 90 degrés par rapport au plateau (140) autour de l'articulation rotative et coulissante accouplée ;
i. translation des pieds (121) tournés et disposés horizontalement le long du guide coulissant extérieur (147) à l'intérieur du compartiment à bagages.
